# EUROPÄISCHE PATENTANMELDUNG

(11) **EP 2 628 646 A1**
(43) Veröffentlichungstag der Anmeldung: **21.08.2013**
(21) Anmeldenummer: 12006770.7
(22) Anmeldetag: 28.09.2012
(51) Int. Cl.: B60R 19/48, B60R 21/013, B60R 21/0136, B60R 21/0132

(54) **Aufprallsensorsystem mit zumindest einem Drucksensor**

(30) Priorität: 17.02.2012 DE 102012101296
(71) Anmelder: Continental Automotive GmbH, 30165 Hannover (DE)
(72) Erfinder: Haupt, Björg, 93047 Regensburg (DE); Tyroller, Tobias, 93051 Regensburg (DE); Feser, Michael, 93092 Barbing (DE)
(74) Vertreter: Büchner, Jörg

(57) **Zusammenfassung**

Es wird ein Aufprallsensorsystem bestehend aus einem bei einem Aufprall deformierbaren Hohlraum und zumindest einem Drucksensor zur Erfassung der Druckänderung im Hohlraum beschrieben.

Im Frontbereich des Fahrzeugs ist zusätzlich zu dem Hohlraum zumindest jeweils ein Beschleunigungssensor am seitlichen Ende des Frontbereichs angeordnet, wobei diese Beschleunigungssensoren am seitlichen Ende des Frontbereichs jeweils schräg zur Fahrtrichtung nach außen ausgerichtet sind.

## Beschreibung

Die Erfindung betrifft ein Aufprallsensorsystem gemäß dem Oberbegriff von Anspruch 1.

Ein Kraftfahrzeug weist dabei mindestens einen, oft auch mehrere Aufprallsensoren zur Erzeugung eines von der Art und/oder Stärke des Aufpralls abhängigen Signals auf.

Ein dazu geeigneter Aufprallsensor besteht aus einem Hohlraum, beispielsweise einem elastisch deformierbaren Schlauch, und zumindest einem Drucksensor zur Erfassung der Druckänderung im Hohlraum. Derartige Aufprallsensoren dienen in Kraftfahrzeugen der Erkennung von Aufprallsituationen, insbesondere auch der Unterscheidung eines Aufpralls eines Fußgängers von anderen Aufprallereignissen und sind beispielsweise aus der EP 937612 A2 bekannt. Für eine geeignete Drucksensierung benötigt der Hohlraum jedoch eine Abstützung gegenüber einem entsprechend stabilen Fahrzeugträgerelement. Während im Bereich des Querträgers zwischen den beiden Längsträgern eine solche Abstützung gut gegeben ist, ist aufgrund der Fahrzeug-Rahmenkonstruktion und Karosserie bis im seitlichen Eckbereich des Frontbereichs nicht vorhanden oder nicht ausreichend.

Darüber hinaus sind in die Fahrzeugfront ausgelagerte Beschleunigungssensoren bekannt. Beschleunigungssensoren im Frontbereich des Fahrzeugs haben jedoch den Nachteil, dass die Signalamplitude stark von dem Auftreffpunkt und der Richtung des Aufpralls abhängig sind.

Beispielsweise aus der DE10 2006 011 033 A1 EP1710598B1 sind darüber hinaus Aufprallsensorsysteme aus einer Kombination von Kontaktsensoren und Beschleunigungssensoren im Frontbereich des Fahrzeugs bekannt.

Die Aufgabe der vorliegenden Erfindung ist es, eine besonders geeignete Ausgestaltung eines solchen Aufprallsensorsystems anzugeben. Diese Aufgabe wird durch die Merkmale der unabhängigen Ansprüche gelöst. Vorteilhafte Weiterbildungen der Erfindung ergeben sind aus den Unteransprüchen, wobei auch Kombinationen und Weiterbildungen einzelner Merkmale miteinander denkbar sind.

Ein wesentlicher Gedanke der Erfindung besteht darin, dass beide an sich bekannten Sensorvorrichtungen miteinander kombiniert werden, wobei die Vorteile beider geeignet ausgenutzt und die Lage der Sensoren entsprechend angepasst werden.

So weist ein erfindungsgemäßes Aufprallsensorsystem einen bei einem Aufprall deformierbaren Hohlraum auf, wobei der Hohlraum im Frontbereich des Fahrzeugs angeordnet ist, vorzugsweise sich der Hohlraum über die Breite des Querträgers im Frontbereich des Fahrzeugs erstreckt. In diesem Bereich ist der Hohlraum gegenüber dem Querträger gut abgestürzt und führt eine Verformung des Hohlraums zu einer entsprechenden Druckänderung, welche wiederum mittels des Drucksensors messbar ist.

Zusätzlich ist zumindest jeweils ein Beschleunigungssensor am seitlichen Ende des Frontbereichs angeordnet. In dieser Position weist eine druckbasierte Erkennung insbesondere bei einem Schrägaufprall Schwächen auf. Ein Beschleunigungssensor kann jedoch vorzugsweise am seitlichen Ende des Frontbereichs jeweils schräg zur Fahrtrichtung nach außen ausgerichtet werden, d.h. in einem von Null verschiedenen Winkel aufweisen. Der Beschleunigungssensor ist damit in besonderer Weise auf den durch einen deformierbaren Hohlraum schwer erfassbaren Schrägaufprall ausgerichtet und empfindlich.

Ein solches Aufprallsensorsystem bietet zudem weitere konstruktive Vorteile und Ausgestaltungen, indem beispielsweise zumindest ein Beschleunigungssensor und zumindest ein Drucksensor eine gemeinsame Verkabelung nutzen, vorzugsweise zudem in einem gemeinsamen Gehäuse angeordnet sind.

Die Signale von Drucksensor und Beschleunigungssensor können dabei jeweils untereinander als auch gegenüber einem Sensor im zentralen Steuergerät kombiniert und plausibilisiert werden, um so zur Auslösung von Schutzeinrichtungen für Insassen des Fahrzeugs als auch Fußgänger zu führen.

Die Erfindung wird nun nachfolgend anhand eines Ausführungsbeispiels unter Zuhilfenahme der Figuren näher erläutert. Im Folgenden können für funktional gleiche und/oder gleiche Elemente mit den gleichen Bezugsziffern bezeichnet sein.

Es zeigen
- Figur 1:: Frontbereich eines Kraftfahrzeugs mit einem Aufprallsensor
- Figur 2:: weitere Ausgestaltung eines Aufprallsensorsystems

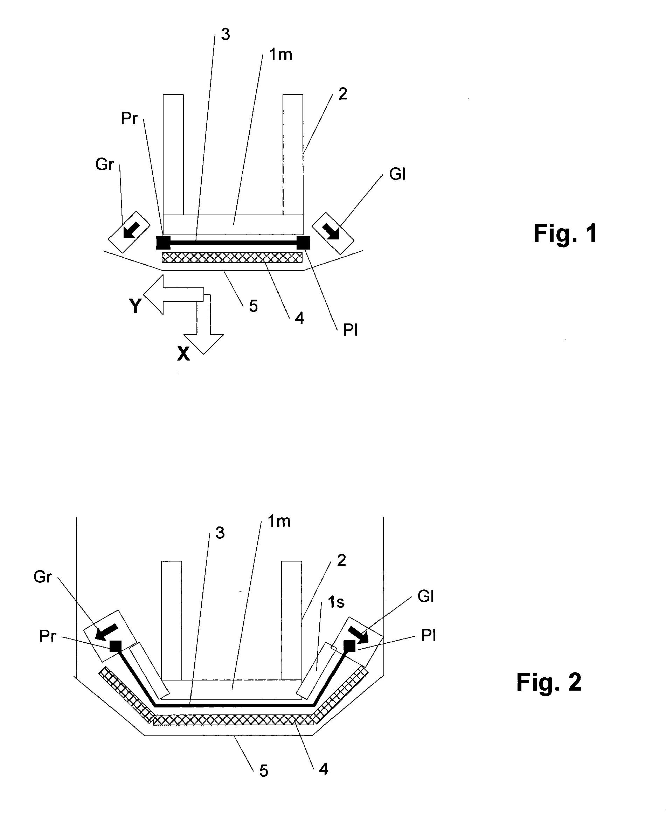

Figur 1 zeigt einen Frontbereich eines Kraftfahrzeugs aus der Draufsicht, wobei die Richtung X der Fahrtrichtung und die Richtung Y der Querrichtung entspricht. Der Frontbereich weist einen Querträger 1 m zwischen zwei Längsträgern 2 auf, wobei vor dem Querträger 1 m neben einem Dämpfungselement 4 und der Außenhaut 5 des Fahrzeugs ein deformierbarer Hohlraum 3, beispielsweise ein elastisch deformierbarer Schlauch angeordnet ist.

Mit dem Hohlraum 3 ist zumindest ein Drucksensor PI/Pr verbunden. In dieser bevorzugten Ausgestaltung ist beidseitig des deformierbaren Schlauchs 3a jeweils ein Drucksensor Pr und PI angeordnet. Die beiden, beidseitig angeordneten Drucksensoren Pr und PI können zu einer wechselseitigen Plausibilisierung ihrer Signale und Funktionsprüfung als auch dem Schutz bei Ausfall eines der Sensoren genutzt werden. Darüber hinaus ist in der Fahrzeugfront zusätzlich zumindest jeweils ein Beschleunigungssensor GI und Gr am seitlichen Ende des Frontbereichs angeordnet. Vorzugsweise ist die Hauptempfindlichkeitsrichtung dieser Beschleunigungssensoren GI/Gr jeweils schräg zur Fahrtrichtung nach außen ausgerichtet, beispielsweise in einem Winkel zwischen 20 und 75 Grad, vorzugsweise zwischen 30 und 50 Grad zur Fahrtrichtung X ausgerichtet.

Der Hohlraum 3 sich erstreckt dabei über die Breite des Querträgers 1 m im Frontbereich des Fahrzeugs und sind die Beschleunigungssensoren GI/Gr am seitlichen Ende des Querträgers oder noch weiter nach außen seitlich versetzt dazu angeordnet.

Figur 2 zeigt nun noch einige konstruktive Weiterbildungen des Aufprallsensorsystems. So ist vorgesehen, dass zumindest ein Beschleunigungssensor und zumindest ein Drucksensor, also bspw. jeweils der rechte und linke zusammen (Pr+Gr/PI+GI) eine gemeinsame Verkabelung nutzen, vorzugsweise zudem in einem gemeinsamen Gehäuse angeordnet sind, d.h. der seitlich rechts angeordnete Beschleunigungssensor und Drucksensor (Pr+Gr) in einem ersten Gehäuse und der seitlich links angeordnete Beschleunigungssensor und Drucksensor (PI+GI) in dem zweiten gemeinsamen Gehäuse verbaut sind, wodurch sich Bauraum und Elektronikkomponenten einsparen lassen. Insbesondere kann die Signalübertragung von beiden Sensoren über ein gemeinsames Kabel beispielsweise im Zeit- oder Code-Multiplex an ein zentrales Steuergerät erfolgen.

Das zentrale Steuergerät kann die Signale von Drucksensor und Beschleunigungssensor gegeneinander plausibilisieren oder mit Signalen zentraler Sensoren oder anderer Sensorsignale, bspw. des ESP, vergleichen und aus den Signalen eine Auslöseentscheidung für Schutzeinrichtungen für Insassen oder Fußgänger ableiten.

Alternativ kann eine lokale Vorverarbeitung oder sogar wechselseitige Plausibilisierung oder Auswahl zwischen den Signalen vorgenommen, also immer das Signal mit höherer Relevanz für den zentralen Auslösealgorithmus übermittelt werden.

Figur 2 zeigt zudem noch eine denkbare konstruktive Ergänzung des Fahrzeugs. Wird zusätzlich der Querträger noch in Richtung der Fahrzeugseite über die Längsträger zwei hinaus durch eine seitliche Verlängerung verlängert, kann der Hohlraum noch weiter auch in den seitlichen Bereich verlängert werden und dort ergänzend zum Beschleunigungssensor eine hinreichende Empfindlichkeit entwickeln.

## Patentansprüche

1. Aufprallsensorsystem bestehend aus einem bei einem Aufprall deformierbaren Hohlraum (3) und zumindest einem Drucksensor (Pr/PI) zur Erfassung der Druckänderung im Hohlraum, wobei der Hohlraum im Frontbereich des Fahrzeugs angeordnet ist, sowie zumindest einem Beschleunigungssensor (Gr/GI) im Frontbereich des Fahrzeugs **dadurch gekennzeichnet, dass** zumindest am seitlichen Ende des Frontbereichs jeweils ein Beschleunigungssensor (Gr/GI) angeordnet ist.

2. Aufprallsensorsystem nach Anspruch 1, **dadurch gekennzeichnet, dass** diese Beschleunigungssensoren (Gr/GI) am seitlichen Ende des Frontbereichs jeweils schräg zur Fahrtrichtung (X) nach außen ausgerichtet sind.

3. Aufprallsensorsystem nach Anspruch 1 oder 2, **dadurch gekennzeichnet, dass** der Hohlraum (3) sich über die Breite des Querträgers im Frontbereich des Fahrzeugs erstreckt und die Beschleunigungssensoren am seitlichen Ende des Querträgers oder noch weiter nach außen seitlich versetzt dazu angeordnet sind.

4. Aufprallsensorsystem nach einem der vorangehenden Ansprüche, **dadurch gekennzeichnet, dass** zumindest ein Beschleunigungssensor und zumindest ein Drucksensor (Pr+Gr/PI+GI) eine gemeinsame Verkabelung nutzen, vorzugsweise zudem in einem gemeinsamen Gehäuse angeordnet sind.
